# EUROPÄISCHE PATENTANMELDUNG

(11) **EP 2 977 568 A1**
(43) Veröffentlichungstag der Anmeldung: **27.01.2016**
(21) Anmeldenummer: 15174641.9
(22) Anmeldetag: 30.06.2015
(51) Int. Cl.: F01L 1/344

(54) **AKTUATOR FÜR EIN HYDRAULIKVENTIL EINES NOCKENWELLENSCHWENKMOTORVERSTELLERS UND HYDRAULIKVENTIL MIT EINEM AKTUATOR FÜR EINEN NOCKENWELLENSCHWENKMOTORVERSTELLER**

(30) Priorität: 25.07.2014 DE 102014010876
(71) Anmelder: Hilite Germany GmbH, 97828 Marktheidenfeld (DE)
(72) Erfinder: Lang, Matthias, 97849 Roden-Ansbach (DE); Schulze, Dietmar, 35394 Gießen (DE)

(57) **Zusammenfassung**

Die Erfindung betrifft einen Aktuator für ein Hydraulikventil eines Nockenwellenschwenkmotorversteller mit einem Magnetgehäuse (7), welches der Aufnahme einer magnetisierten Metallhülse (71) und einer von der Metallhülse (71) radial umfassten Spule (22) dient zur Erzeugung eines Magnetfeldes, wobei die Spule (22) in einem im Magnetgehäuse (7) positionierten nichtmagnetisierbaren Spulenträger (23) unbewegbar aufgenommen ist, und wobei der Spulenträger (23) zumindest teilweise einen Polkern (8) und ein vom Polkern (8) axial beabstandetes Polkernjoch (82) umfasst, und wobei der Polkern (8) und das Polkernjoch (82) eine Hülse (10) radial begrenzend positioniert sind, wobei die nichtmagnetische Hülse (10) eine Trennwand zwischen einem Innenraum (15) der Hülse (10) und dem Polkern (8) bzw. dem Polkernjoch (82) bildet, und wobei im Innenraum (15) ein Anker (24) mit einem mit dem Anker (24) in Wirkverbindung stehenden Stößel (21) entlang einer Längsachse (L2) des Aktuators (2) axial bewegbar angeordnet ist, und wobei im Innenraum (15) ein Hydraulikfluid zur verbesserten Bewegbarkeit des Ankers (24) ausgebildet ist, und wobei der Stößel (21) zur Positionierung eines Ventilkolbens (4) des Hydraulikventils (1) ausgebildet ist, wobei der Stößel (21) den Ventilkolben (4) berührbar ausgeführt ist, und wobei der Stößel (21) einen Polkerneinsatz (84), welcher im Magnetgehäuse (7) positioniert ist, derart, dass er dem mit Hydraulikfluid durchströmbaren Hydraulikventil (1) benachbart anordenbar ist, axial vollständig durchdringen kann, und wobei der Anker (24) bei Anlegen einer Spannung an die Spule (22) bewegbar ist. Der Polkerneinsatz (84) verschließt den Innenraum (15) der Hülse (10) und den Hohlraum (73) des Magnetgehäuses (7) gegenüber dem Hydraulikventil (7), wobei zur Abdichtung der Spule (22) gegenüber dem Hydraulikfluid des Hydraulikventils (1) sowie gegenüber dem Hydraulikfluid des Innenraums (15) ein erstes Dichtelement (14) zwischen dem Polkerneinsatz (84), die Hülse (10) umfassend, im Hohlraum (73) angeordnet ist.

## Beschreibung

Die Erfindung betrifft einen Aktuator für ein Hydraulikventil eines Nockenwellenschwenkmotorverstellers nach dem Oberbegriff des Patentanspruchs 1 und ein Hydraulikventil mit einem Aktuator für einen Nockenwellenschwenkmotorversteller nach dem Oberbegriff des Patentanspruchs 11.

Hydraulikventile für Schwenkmotorenversteller einer Nockenwelle sind hinlänglich bekannt. Die Hydraulikventile weisen einen Ventilkolben auf, welcher in einem Ventilgehäuse des Hydraulikventils axial bewegbar ist. Üblicherweise sind am Ventilgehäuse ein erster Arbeitsanschluss, ein zweiter Arbeitsanschluss und ein Versorgungsanschluss ausgebildet. Der erste Arbeitsanschluss und der zweite Arbeitsanschluss sind mit dem Schwenkmotorenversteller verbunden und über diese Anschlüsse ist ein Hydraulikfluid sowohl in das Hydraulikventil als auch aus dem Hydraulikventil förderbar. Zur Versorgung des Hydraulikventils mit dem mit Hilfe einer Fördereinrichtung geförderten Hydraulikfluid weist das Ventilgehäuse den Versorgungsanschluss auf. Das Hydraulikfluid kann mit Hilfe eines durchströmbaren Kanalsystems des Ventilkolbens das Hydraulikventil unterschiedlich durchströmen.

Der Ventilkolben wird mit Hilfe eines elektromagnetischen Aktuators bewegt. Hierzu weist der Aktuator einen im Allgemeinen axial bewegbaren Stempel auf, welcher in Wirkverbindung mit dem Ventilkolben steht. Eine Axialbewegung des Stempels wird auf den Ventilkolben übertragen, sodass dieser seine Position innerhalb des Hydraulikventils verändert.

Da das Hydraulikventil von einem Hydraulikfluid, im Allgemein ein Hydrauliköl durchströmt wird, muss der Aktuator gegenüber dem Hydraulikventil sicher abgedichtet sein, so dass insbesondere eine Spule des elektromagnetischen Aktuators gegenüber einem Eindringen des Hydraulikfluids geschützt ist.

Des Weiteren ist die Spule vor einem Eindringen eines Hydraulikfluids, welches sich im Aktuator selbst befindet zu schützen. Dieses Hydraulikfluid ist zur Bewegung eines mit dem Stößel in Wirkverbindung stehenden Ankers vorgesehen, da der Anker zur axialen Bewegung des Stößels bewegbar im Aktuator aufgenommen ist.

Aus der Offenlegungsschrift US 2006/0071560 A1 geht ein Aktuator hervor, welcher zur Abgrenzung der Spule gegenüber dem zur Bewegung des Ankers notwendigen Hydraulikfluids eine Hülse aufweist, in deren Innenraum der Anker axial bewegbar aufgenommen ist. Mit Hilfe der Hülse ist ein Innenraum der Hülse gegenüber einem Hohlraum des Aktuators abgegrenzt, wobei der Hohlraum überwiegend mit Hilfe eines Spulenträgers und eines Poljochs ausgebildet ist. Ein zumindest teilweise im Innenraum der Hülse aufgenommener Polkerneinsatz verschließt den Innenraum gegenüber einem Hydraulikventil, welches dem Polkerneinsatz gegenüberliegend anordenbar ist, so dass der Stößel des Aktuators ein Ventilkolben des Hydraulikventils verschieben kann. Der Hohlraum wird mit Hilfe einer Krempe der Hülse gegenüber einem Hydraulikfluid des Aktuators abgegrenzt, wobei die Krempe in Form einer stufenformartig ausgebildeten Krempenscheibe gestaltet ist.

Die Druckschrift DE 10 2006 011 078 A1 offenbart einen Aktuator in Form eines Hubmagneten, welcher einen Anker mit einem Stößel aufweist, wobei dieser Anker axial bewegbar innerhalb eines Innenraums einer Hülse angeordnet ist. Ein Polkerneinsatz ist zumindest teilweise im Innenraum aufgenommen. Die Hülse umfassend ist ein Spulenträger zur Aufnahme der mit einer Spannung beaufschlagenden Spule angeordnet. Der Polkerneinsatz schließt den Innenraum der Hülse gegenüber dem dem Polkerneinsatz gegenüberliegend anordenbaren Schaltventils ab. An einem dem Polkerneinsatz zugewandt ausgebildeten Ende der Hülse ist eine Krempe der Hülse in Form einer Krempenscheibe ausgebildet, welche zwischen dem Spulenträger und einer den Polkerneinsatz abstützenden Konusscheibe positioniert ist und einen überwiegend mit Hilfe des Spulenträgers ausgebildeten Hohlraum des Aktuators gegenüber einem Hydraulikfluid des Aktuators verschließt.

Ein Aktuator für ein Hydraulikventil, welches eine zylinderförmige Hülse umfasst, geht aus der Patentschrift DE 10 2009 043 320 B4 hervor. Der Aktuator ist für ein Hydraulikventil eines Nockenwellenschwenkmotorverstellers mit einem Magnetgehäuse, welches der Aufnahme einer magnetisierten Metallhülse bzw. eines Magneten dient, ausgeführt. Die Metallhülse umfasst radial eine Spule, welche zur Erzeugung eines Magnetfeldes ausgebildet ist. Die Spule ist in einem im Magnetgehäuse positionierten nichtmagnetisierbaren Spulenträger unbewegbar aufgenommen. Eine nichtmagnetisierbare Hülse bildet eine Trennwand zwischen einem Innenraum der Hülse und einem Polkern sowie einem vom Polkern axial beabstandeten Polkernjoch, welche vom Spulenträger zumindest teilweise umfasst in einem Hohlraum des Magnetgehäuses angeordnet sind. In der Hülse ist ein axial bewegbarer Anker mit einem in Wirkverbindung mit dem Anker stehender Stößel zur Positionierung eines Ventilkolbens des Hydraulikventils angeordnet. Die Hülse schließt mit Hilfe einer an der Hülse ausgebildeten scheibenförmigen Krempe, welche an einem dem Hydraulikventil zugewandt positionierten Ende ausgestaltet ist, den Innenraum gegenüber dem Hohlraum ab. Ein überwiegend im Innenraum aufgenommener Polkerneinsatz schließt den Innenraum gegenüber dem Hydraulikventil ab, wobei ein Dichtelement zwischen der Krempe und dem Hydraulikventil angeordnet ist.

Die Aufgabe der vorliegenden Erfindung ist es, einen Aktuator für ein Hydraulikventil eines Nockenwellenschwenkmotorverstellers bereitzustellen, dessen Spule sicher gegenüber einem Eindringen von Hydraulikfluid geschützt ist. Eine weitere Aufgabe der Erfindung ist es ein Hydraulikventil mit einem Aktuator für einen Nockenwellenschwenkmotorversteller bereitzustellen, welches ein verbessertes Betriebsverhalten aufweist.

Die Aufgabe wird erfindungsgemäß durch einen Aktuator für ein Hydraulikventil eines Nockenwellenschwenkmotorverstellers mit den Merkmalen das Patentanspruchs 1 gelöst. Die weitere Aufgabe wird erfindungsgemäß durch einen ein Hydraulikventil mit einem Aktuator für einen Nockenwellenschwenkmotorversteller mit den Merkmalen das Patentanspruchs 11 gelöst. Vorteilhafte Ausgestaltungen mit zweckmäßigen und nicht-trivialen Weiterbildungen der Erfindung sind in den jeweiligen Unteransprüchen angegeben.

Der erfindungsgemäße Aktuator für ein Hydraulikventil eines Nockenwellenschwenkmotorverstellers beinhaltet ein Magnetgehäuse, welches der Aufnahme einer magnetisierten Metallhülse bzw. eines Magneten, dient. Die Metallhülse umfasst radial eine Spule, welche zur Erzeugung eines Magnetfeldes ausgebildet ist. Die Spule ist in einem im Magnetgehäuse positionierten nichtmagnetisierbaren Spulenträger unbewegbar aufgenommen. Eine nichtmagnetisierbare Hülse bildet eine Trennwand zwischen einem Innenraum der Hülse und einem Polkern sowie einem vom Polkern axial beabstandeten Polkernjoch, welche vom Spulenträger zumindest teilweise umfasst in einem Hohlraum des Magnetgehäuses angeordnet sind. Im Innenraum ist ein Anker mit einem mit dem Anker in Wirkverbindung stehenden Stößel entlang einer Längsachse des Aktuators axial bewegbar angeordnet, wobei im Innenraum ein Hydraulikfluid zur verbesserten Bewegbarkeit des Ankers vorliegt. Der Stößel ist einen Ventilkolben des Hydraulikventils berührbar ausgeführt, wobei der Stößel einen Polkerneinsatz, welcher im Magnetgehäuse dem Hydraulikventil gegenüberliegend bzw. benachbart anordenbar ist, axial vollständig durchdringen kann. Der Anker wird bei Anlegen einer Spannung an die Spule axial bewegt aufgrund eines mit Hilfe der Metallhülse, des Polkerns, des Polkernjochs und des Polkerneinsatzes und der Spule erzeugten Magnetfeldes. Zum Schutz bzw. zur Abdichtung der Spule sowohl vor einem Eindringen eines Hydraulikfluids aus dem benachbart anordenbaren Hydraulikventils als auch vor dem Eindringen des im Innenraum der Hülse ausgebildeten Hydraulikfluids ist der Polkerneinsatz den Innenraum gegenüber dem Hydraulikventil sowie den Hohlraum des Magnetgehäuses verschließend ausgebildet, wobei ein erstes Dichtelement zwischen dem Polkerneinsatz und dem Spulenträger, die Hülse umfassend, im Hohlraum angeordnet ist.

Die Positionierung des ersten Dichtelementes zwischen dem Polkerneinsatz und dem vom Polkerneinsatz gegenüber dem Hydraulikventil abgeschlossenen Hohlraum führt zum Einen zu einem gesicherten Schutz der Spule gegenüber einem Eindringen des Hydraulikfluids des Hydraulikventils. Zum Anderen wird auch, da das erste Dichtelement die Hülse umfassend, also an einer Mantelfläche der Hülse ausgebildet ist, ein Schutz gewährt gegenüber einem aus der Hülse austretenden Hydraulikfluids.

Bevorzugt ist das erste Dichtelement im Bereich eines dem Polkerneinsatz zugewandt ausgebildeten Endes der Hülse angeordnet, so dass selbst bei einem Austreten von Hydraulikfluid aus der Hülse die Spule vor einem Eindringen des Hydraulikfluids geschützt ist.

Zur vereinfachten Manufaktur weist der Polkern eine an seinem dem Polkerneinsatz zugewandt ausgebildeten Ende ein mit dem Polkern in Wirkverbindung stehende erste Polscheibe auf, wobei das erste Dichtelement zwischen dem Polkerneinsatz und der ersten Polscheibe positioniert ist, so dass eine weiter verbesserte Sicherheit gegenüber dem Eindringen von Hydraulikfluid in die Spule gegeben ist.

In einer weiteren Ausgestaltung weist die Hülse eine dem Polkerneinsatz zugewandt positionierbare Krempe auf, wobei das erste Dichtelement angrenzend an die Krempe sowie angrenzend an den Polkerneinsatz angeordnet ist.

Zur verbesserten Abdichtung ist die Krempe in ihrer axialen Erstreckung gebogen ausgebildet. Damit ist eine wesentlich verbesserte Abdichtwirkung gegenüber einer bekannten Hülse mit einer sich überwiegend in radialer Richtung erstreckenden Krempe gegeben, da das Hydraulikfluid ähnlich einer Labyrinthdichtung vor einem Übertritt in seiner Strömungsrichtung mindestens zwei Richtungswechsel überwinden müsste.

Insbesondere weist die Krempe einen Krempenring und eine mit dem Krempenring verbundene Krempenscheibe auf, wobei der Krempenring und die Krempenscheibe unter Ausbildung eines Winkels miteinander verbunden sind. Das heißt, die Hülse mit der Krempe ist topfformartig ausgebildet und kann, insbesondere bei Ausbildung des Winkels mit einem Wert von 90° einfachst hergestellt werden, bspw. in einem einfachen Tiefziehverfahren, da keine Hinterschneidungen ausgebildet sind. Des Weiteren dient diese Krempenform einem Anschlag des Polkerneinsatzes.

In einer weiteren Ausgestaltung des erfindungsgemäßen Aktuators ist das erste Dichtelement die Krempe umfassend, zwischen der Krempe und dem Magnetgehäuse positioniert. Somit dient zusätzlich zur Krempe das erste Dichtelement einer Abdichtung der Spule gegenüber einem Eindringen von Hydraulikfluid. Bevorzugter Weise ist das erste Dichtelement den Krempenring der Krempe umfassend ausgebildet.

Ein erfindungsgemäßes Hydraulikventil weist zur axialen Bewegung eines in einem Ventilgehäuse des Hydraulikventils axial bewegbar aufgenommenen Ventilkolbens des Hydraulikventils, wobei ein Stößel des Aktuators in Wirkverbindung mit dem Ventilkolben steht, vorteilhafterweise einen Aktuator mit den Merkmalen der Patentansprüche 1 bis 10 auf, so dass ein zuverlässiger Betrieb und somit verbesserter Betrieb des Hydraulikventils realisierbar ist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Gleichen oder funktionsgleichen Elementen sind identische Bezugszeichen zugeordnet. Aus Gründen der Übersichtlichkeit ist es möglich, dass die Elemente nicht in allen Figuren mit ihrem Bezugszeichen versehen sind, ohne jedoch ihre Zuordnung zu verlieren. Es zeigen:
- Fig. 1: in einem Längsschnitt einen Aktuator des Standes der Technik mit einem Hydraulikventil, und
- Fig. 2: in einem Längsschnitt einen erfindungsgemäßen Aktuator.

Ein nicht näher dargestellter Schwenkmotorversteller erlaubt während des Betriebes eines nicht näher dargestellten Verbrennungsmotors eine Änderung von Öffnungs- und Schließzeiten von Gaswechselventilen des Verbrennungsmotors herbeizuführen. Hierzu wird mit Hilfe des Schwenkmotorverstellers eine relative Winkellage einer nicht näher dargestellten Nockenwelle des Verbrennungsmotors gegenüber einer nicht näher dargestellten Kurbelwelle des Verbrennungsmotors stufenlos verändert, wobei die Nockenwelle relativ zur Kurbelwelle verdreht wird. Durch Verdrehen der Nockenwelle werden die Öffnungs- und Schließzeitpunkte der Gaswechselventile so verschoben, dass der Verbrennungsmotor bei der jeweiligen Drehzahl seine optimale Leistung bringt.

Der Schwenkmotorversteller weist hierzu nicht näher dargestellte Kammern auf, welche je nach gewünschter Positionierung der Nockenwelle befüllt oder entleert werden. Die Kammern sind nebeneinander angeordnet und werden jeweils abwechselnd mit Hydraulikfluid beaufschlagt oder entleert. Das heißt, wird eine Kammer befüllt, so wird eine andere Kammer entleert. Diese abwechselnde Befüllung und Entleerung führt zu einer Änderung der Nockenwellenposition durch Rotation.

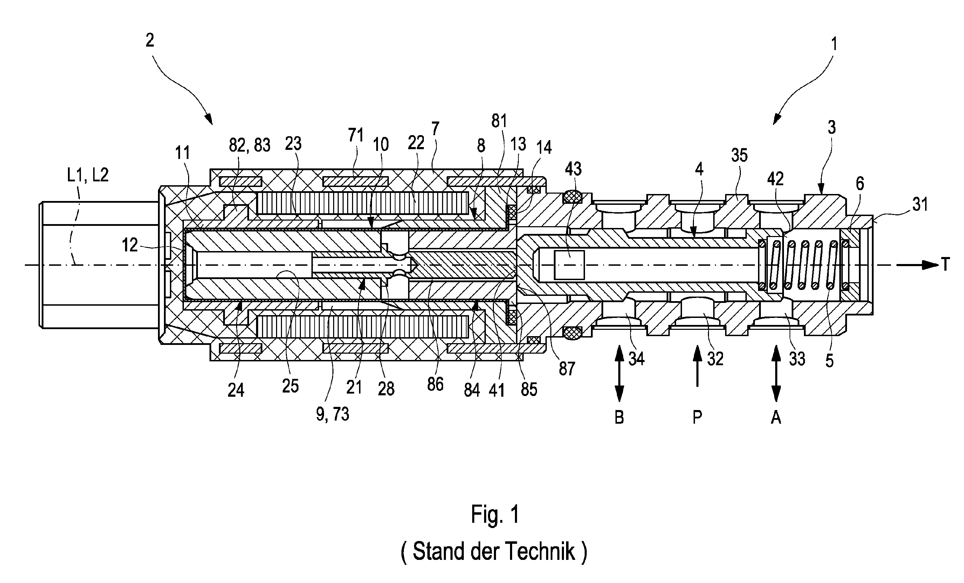

Zur Befüllung bzw. Entleerung der Kammern mit Hydraulikfluid ist ein Hydraulikventil 1 des Standes der Technik gem. Fig. 1 ausgebildet, welches einen Aktuator 2 aufweist, mit dessen Hilfe das Hydraulikventil 1 gesteuert wird. Der Aktuator 2 ist elektromagnetisch. Der Aktuator 2 und das Hydraulikventil 1 sind nebeneinander angeordnet, wobei eine erste Längsachse L1 des Hydraulikventils 1 koaxial mit einer zweiten Längsachse L2 des Aktuators 2 ausgebildet ist.

In Fig. 1 ist das Hydraulikventil 1 in einem Längsschnitt in einer ersten Ventilstellung dargestellt. Das Hydraulikventil 1 ist ähnlich einem Cartridge-Ventil aufgebaut und weist ein Ventilgehäuse 3 auf, innerhalb dessen ein Ventilkolben 4 axial verschiebbar angeordnet ist.

Zur Verschiebung des Ventilkolbens 4 ist eine dem Aktuator 2 zugewandt ausgebildete erste Stirnfläche 41 des Ventilkolbens 4 geschlossen, so dass ein Stößel 21 des elektromagnetischen Aktuators 2 an dieser ersten Stirnfläche 41 anliegen kann. Eine Bestromung des Aktuators 2 führt zur axialen Verschiebung des Ventilkolbens 4, wobei ein an einer zweiten Stirnfläche 42 des Ventilkolbens 4, welche von der ersten Stirnfläche 41 abgewandt ausgebildet ist, angebrachtes Rückhalteelement 5 eine Rückhaltekraft auf den Ventilkolben 4 ausübt, gegen die der Ventilkolben 4 zu verschieben ist. Das Rückhalteelement 5, in diesem Ausführungsbeispiel in Form einer Schraubendruckfeder ausgebildet, stützt sich an einem Hohlzylinder 6 ab, welcher im Bereich einer vom Aktuator 2 abgewandt ausgebildete Gehäusestirnfläche 31 mit Presssitz im Ventilgehäuse 3 angeordnet ist.

Das buchsenartig ausgebildete Ventilgehäuse 3 weist einen Versorgungsanschluss P, einen ersten Arbeitanschluss A und einen zweiten Arbeitsanschluss B auf. Dem Versorgungsanschluss P, dem ersten Arbeitsanschluss A und dem zweiten Arbeitsanschluss B sind eine erste Ringnut 32, eine zweite Ringnut 33 bzw. eine dritte Ringnut 34 zugeordnet, die jeweils über nicht näher dargestellte Anschlusskanäle mit den Anschlüssen verbunden sind. Die Anschlusskanäle sind eine Gehäusewand 35 des Ventilgehäuses 3 vollständig durchdringend ausgebildet.

Der Versorgungsanschluss P ist zur Verbindung mit einer nicht näher dargestellten Ölpumpe ausgestaltet, so dass das Hydraulikventil 1 mit dem Hydraulikfluid, welches in diesem Ausführungsbeispiel Öl ist, versorgbar ist. Die Arbeitsanschlüsse A, B sind mit den entsprechenden Kammern verbindbar, so dass über diese Arbeitsanschlüsse das Hydraulikfluid in den Ventilkolben 4 hineinfließen oder aus dem Ventilkolben 4 hinausfließen kann. Ein Tankanschluß T ist an der Gehäusestirnfläche 31 ausgebildet.

Je nach Positionierung des durchströmbar ausgebildeten Ventilkolbens 4, welcher mit Hilfe des Stößels 21 axial verschoben wird, wird entweder der Arbeitsanschluss A mit dem Versorgungsanschluß P oder der Versorgunsganschluß P mit dem Arbeitsanschluß B durchströmbar verbunden. Wenn der Arbeitsanschluss A mit dem Versorgungsanschluß P durchströmbar verbunden ist, ist die durchströmbare Verbindung des Arbeitsanschluß B mit dem Tankanschluß T mit Hilfe einer den Ventilkolben 4 radial vollständig durchdringenden Durchtrittsöffnung 43 ausgebildet. Ist hingegen der Arbeitsanschluss B mit dem Versorgungsanschluß P durchströmbar verbunden, so ist der Arbeitsanschluß A unmittelbar mit dem Tankanschluß T durchströmbar verbunden.

Der im Wesentlichen zylinderformartig ausgebildete elektromagnetische Aktuator 2 weist eine Spule 22 auf, welche von magnetisierbaren Metallhülsen 71 bzw. einem Magnete aufweisenden Magnetgehäuse 7 umfasst ist. Das Magnetgehäuse 7 ist als ein Kunststoffspritzteil hergestellt, wobei die Metallhülsen 71 in diesem eingebettet sind. Die Spule 22 ist mit Hilfe eines die Spule 22umfassenden Spulenträgers 23 unbewegbar gelagert, wobei der Spulenträger 23 am Magnetgehäuse 7 fixiert ist.

Innerhalb dieses Magnetgehäuses 7 ist ein Polkern 8 ausgebildet, welcher mit einem Polkernflansch 81 ausgestaltet ist. Der Polkernflansch 81 ist mit einem Kontakt zur Metallhülse 71 ausgebildet, welche über das Magnetgehäuse 7 axial hinausragt.

Am Polkernflansch 81 ist der aus einem Spritzstoffkunststoff hergestellte Spulenträger 23 sich abstützend ausgebildet. Ein hohlzylinderformartig ausgeführtes Polkernjoch 82 ist einteilig mit einer ersten Polkernscheibe 83 ausgebildet und mit Hilfe eines Luftspaltes 9 axial vom hülsenformartig ausgebildeten Polkern 8 beabstandet im Spulenträger 23 unbewegbar aufgenommen.

Der Aktuator 2 weist eine dünne, nichtmagnetisierbare, zylindrisch geformte Hülse 10, welche an ihrer Außenmantelfläche 11 im wesentlichen vom Polkernjoch 82 und vom Polkern 8 umfasst ist, wobei das Polkernjoch 82 und der Polkern 8 an die Außenmantelfläche 11 der Hülse 10 anliegen.

Die Hülse 10 weist einen Boden 12 auf, so dass die Hülse 10 einseitig geschlossen ausgebildet ist. Der Boden 12 stützt sich am Spulenträger 23 axial ab. An ihrer vom Boden 12 abgewandt ausgebildeten offenen Seite weist die Hülse 10 eine Krempe 13 auf. Mit Hilfe dieser Krempe 13 stützt sich die Hülse 10 axial am Polkernflansch 81 ab und dient einer axialen Sicherung des Polkerns 8.

Die Hülse 10 ist zur Aufnahme eines hohlzylinderartig geformten Ankers 24 und eines vom Anker 24 axial beabstandeten hohlzylinderartig geformten Polkerneinsatzes 84 ausgestaltet. Der Stößel 21 ist an seinem von der ersten Stirnfläche 41 abgewandt ausgebildeten Ende in einer Aufnahmeöffnung 25 des Ankers 24 unter Einhaltung einer Presspassung fixiert, wobei eine Antiklebscheibe 28 des Stößels 21, welche scheibenförmig am Stößel 21 ausgebildet ist, einen Anschlag zur Abstützung am Anker 24 bildet. Somit ist der Stößel 21 mit dem Anker 24 wirkverbunden und eine axiale Bewegung des Ankers 24 ist auf den Stößel 21 übertragbar.

Der Stößel 21 erstreckt sich zur Berührung der ersten Stirnfläche 41 axial durch eine den Polkerneinsatz 84 axial vollständig durchdringende Durchgangsöffnung 86 und bewegt sich infolge einer Bewegung des Ankers 24 axial in der Durchgangsöffnung 86.

Der Polkerneinsatz 84 weist an seinem vom Anker 24 abgewandt ausgebildeten Ende einen Polkerneinsatzbund 85 auf, welcher mit dem Polkernflansch 81 bündig ausgebildet ist. Das heißt mit anderen Worten, dass eine ebene Grenzfläche 87, welche an das benachbart anliegende Hydraulikventil 1 angrenzt, ausgebildet ist. Zu Abdichtung des Aktuators 2 gegenüber aus dem Hydraulikventil 1 entweichenden Hydraulikfluids ist ein erstes Dichtelement 14 axial zwischen der Krempe 13 und dem gegenüberliegend positionierten Ventilgehäuses 3 sowie radial zwischen dem Polkerneinsatzbund 85 und dem Polkernflansch 81 angeordnet.

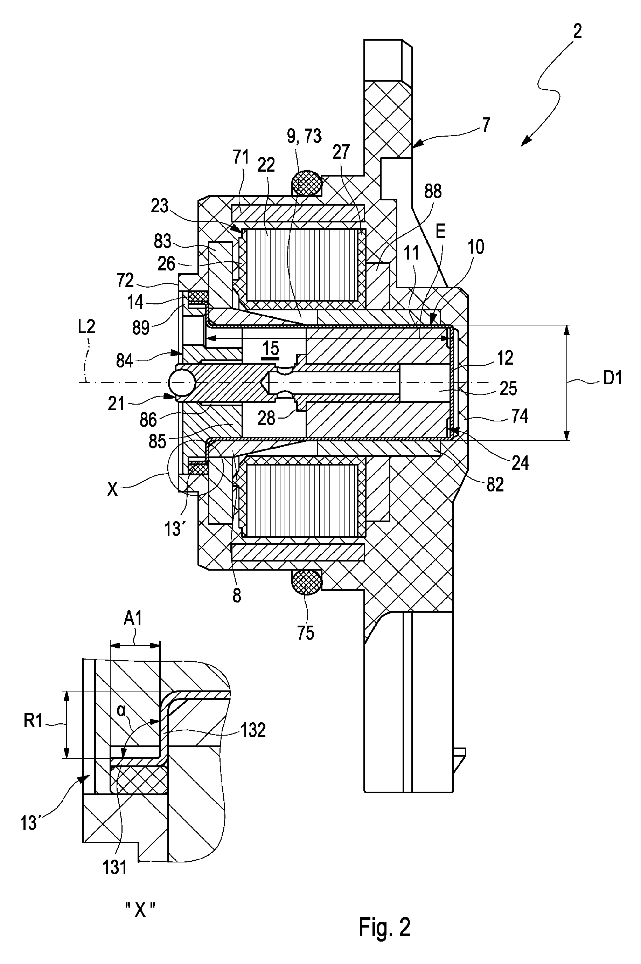

Ein erfindungsgemäßer Aktuator 2 ist in Fig. 2 dargestellt. Die Spule 22 ist im Spulenträger 23 unbewegbar aufgenommen. Von der Spule 22 in radialer Richtung beabstandet ist die Magnethülse 71 im Magnetgehäuse 7 angeordnet. Axial neben dem Spulenträger 23 ist auf einer ersten Seite 26 des Spulenträgers 23, welche in Richtung des Hydraulikventils 1 positionierbar ist, die erste Polscheibe 83 und auf der zweiten Seite 27 des Spulenträgers 23, welche von der ersten Seite 26 abgewandt ausgebildet ist eine zweite Polscheibe 88 angeordnet.

Die erste Polscheibe 83, die zweite Polscheibe 88, der Spulenträger 23 mit der Spule 22 sowie die Magnethülse 7 sind unbewegbar im Magnetgehäuse 7 angeordnet, wobei das Magnetgehäuse 7 als Kunststoffspritzteil die genannten Bauteile bettet. Das Magnetgehäuse 7 weist an seiner dem Hydraulikventil 1 zuwendbaren Seite einen Gehäusebund 72 auf.

In einem Hohlraum 73 des Magnetgehäuses 7, welcher von dem Spulenträger 23, der ersten Polscheibe 83 und der zweiten Polscheibe 88 radial umfasst ist, sind der Polkern 8 an die erste Polscheibe 83 angrenzend und das hohlzylindrisch ausgebildetes Polkernjoch 82 an die zweite Polscheibe 88 angrenzend positioniert, wobei der Polkern 8 und das Polkernjoch 82 unter Einhaltung des Luftspaltes 9 axial voneinander beabstandet sind.

Der Aktuator 2 weist die dünne, nichtmagnetisierbare, zylindrisch geformte Hülse 10, welche an ihrer Außenmantelfläche 11 im wesentlichen vom Polkernjoch 82 und vom Polkern 8 umfasst ist, wobei das Polkernjoch 82 und der Polkern 8 an die Außenmantelfläche 11 der Hülse 10 anliegen.

Der hohlzylinderartig geformte Anker 24 und der vom Anker 24 axial beabstandete, hohlzylinderartig geformten Polkerneinsatz sind in der Hülse 10 aufgenommen, wobei der Anker 24 axial bewegbar in der Hülse 10 zu Positionierung des mit dem Anker 24 mit Hilfe der Presspassung fest verbundnen Stößels 21. Zur axialen Bewegbarkeit des Ankers 24 liegt ein Hydraulikfluid im Innenraum 15 an.

Die Hülse 10 weist den Boden 12 auf, so dass die Hülse 10 einseitig geschlossen ist, wobei sich der Boden 10 an einer Rückwand 74 des Magnetgehäuses 7 axial abstützt. An seiner vom Boden 12 abgewandt ausgebildeten offenen Seite weist die Hülse 10 eine Krempe 13' auf. Unabhängig von der Krempe 13' ist die Hülse 10 über ihre axiale Erstreckung E ungestuft, d. h. einen einzigen Durchmesser D1 aufweisend ausgebildet.

Die Krempe 13' ist in ihrer axialen Erstreckung gebogen ausgebildet. Mit anderen Worten umfasst die Krempe 13' einen sich axial über eine erste Länge A1 erstrecken Krempenring 131 und einen sich radial über eine zweite Länge R1 erstreckenden Krempenscheibe 132, wobei der Krempenring 131 und die Krempenscheibe 132 unter Ausbildung eines Winkels α miteinander verbunden sind, dessen Wert idealerweise 90° beträgt. So ist die Hülse 10 als einfaches Tiefziehbauteil herzustellen.

Die Hülse 10 ist an ihrem die Krempe 13' aufweisenden Ende mit Hilfe des Polkerneinsatzes 84 im Magnetgehäuse 7 unbewegbar fixiert. Der Polkerneinsatz 84 ist im Magnetgehäuse 7 unbewegbar aufgenommen und zum einen den Hohlraum 73 und zum anderen die Hülse 10 an ihrem die Krempe 13' aufweisenden offenen Ende verschließbar ausgebildet.

Ein scheibenförmig ausgebildeter Ringbund 89, welcher an einer vom Anker 24 abgewandt ausgebildeten Seite des Polkerneinsatzes 84 am Polkerneinsatzbund 85, diesen radial umfassend ausgebildet ist, dient einer axialen Abstützung der Hülse 10, wobei der Krempenring 131 an den Ringbund 89 anliegend ausgeführt ist. In einer Detailzeichnung "X" der Fig. 2 ist die Krempe 13' deutlich dargestellt.

Der Krempenring 131 ist vollständig über seinem radialen Umfang vom ersten Dichtelement 14 umfasst, wobei das erste Dichtelement 14 axial zwischen der ersten Polscheibe 83 und dem Ringbund 89 aufgenommen ist.

Somit ist der Polkerneinsatz 84 den Innenraum 15 und den Hohlraum 73 verschließend, wobei die gebogen, bzw. gewinkelt ausgebildete Krempe 13' neben einem Anschlag des Polkerneinsatzes 84 einer Positionierung des ersten Dichtelementes 14 dient, so dass eine gesicherte Abdichtung der Spule 22 gegenüber einem Eindringen von Hydraulikfluid zum Einen aus dem Innenraum 15 sowie zum Anderen gegenüber einem Eindringen von Hydraulikfluid aus dem Hydraulikventil 1 bereitgestellt ist.

Zur äußeren Abdichtung ist am Magnetgehäuse 7 dieses radial umfassend ein zweites Dichtelement 75 ausgebildet.

### Bezugszeichenliste MO11009

- 1: Hydraulikventil
- 2: Aktuator
- 3: Ventilgehäuse
- 4: Ventilkolben
- 5: Rückhalteelement
- 6: Hohlzylinder
- 7: Magnetgehäuse
- 8: Polkern
- 9: Luftspalt
- 10: Hülse
- 11: Außenmantelfläche
- 12: Boden
- 13, 13': Krempe
- 14: erstes Dichtelement
- 15: Innenraum
- 21: Stößel
- 22: Spule
- 23: Spulenträger
- 24: Anker
- 25: Aufnahmeöffnung
- 26: erste Seite
- 27: zweite Seite
- 28: Antiklebscheibe
- 31: Gehäusestirnfläche
- 32: erste Ringnut
- 33: zweite Ringnut
- 34: dritte Ringnut
- 35: Gehäusewand
- 41: erste Stirnfläche
- 42: zweite Stirnfläche
- 43: Durchtrittsöffnung
- 71: Metallhülsen
- 72: Gehäusebund
- 73: Hohlraum
- 74: Rückwand
- 75: zweites Dichtelement
- 81: Polkernflansch
- 82: Polkernjoch
- 83: erste Polscheibe
- 84: Polkerneinsatz
- 85: Polkerneinsatzbund
- 86: Durchgangsöffnung
- 87: Grenzfläche
- 88: zweite Polscheibe
- 89: Ringbund
- 131: Krempenring
- 132: Krempenscheibe

- A: erster Arbeitsanschluss
- A1: erste Länge
- B: zweiter Arbeitsanschluss
- D1: Durchmesser
- E: Erstreckung
- L1: erste Längsachse
- L2: zweite Längsachse
- P: Versorgungsanschluss
- R1: zweite Länge
- T: Tankanschluß
- α: Winkel

## Patentansprüche

1. Aktuator für ein Hydraulikventil eines Nockenwellenschwenkmotorverstellers mit einem Magnetgehäuse (7), welches der Aufnahme einer magnetisierten Metallhülse (71) und einer von der Metallhülse (71) radial umfassten Spule (22) dient zur Erzeugung eines Magnetfeldes, wobei die Spule (22) in einem im Magnetgehäuse (7) in dessen Hohlraum (73) positionierten nichtmagnetisierbaren Spulenträger (23) unbewegbar aufgenommen ist, und wobei der Spulenträger (23) zumindest teilweise einen Polkern (8) und ein vom Polkern (8) axial beabstandetes Polkernjoch (82) umfasst, und
wobei der Polkern (8) und das Polkernjoch (82) eine nichtmagnetische Hülse (10) radial begrenzend positioniert sind, wobei die Hülse (10) eine Trennwand zwischen dem Hohlraum (73) und einem Innenraum (15) der Hülse (10) bildet, und
wobei im Innenraum (15) ein Anker (24) mit einem mit dem Anker (24) in Wirkverbindung stehenden Stößel (21) entlang einer Längsachse (L2) des Aktuators (2) axial bewegbar angeordnet ist, und
wobei im Innenraum (15) ein Hydraulikfluid zur verbesserten Bewegbarkeit des Ankers (24) ausgebildet ist, und
wobei der Stößel (21) zur Positionierung eines Ventilkolbens (4) des Hydraulikventils (1) ausgebildet ist, wobei der Stößel (21) den Ventilkolben (4) berührbar ausgeführt ist, und
wobei der Stößel (21) einen Polkerneinsatz (84), welcher im Magnetgehäuse (7) positioniert ist, derart, dass er dem mit Hydraulikfluid durchströmbaren Hydraulikventil (1) benachbart anordenbar ist, axial vollständig durchdringen kann, und
wobei der Anker (24) bei Anlegen einer Spannung an die Spule (22) bewegbar ist,
**dadurch gekennzeichnet, dass**
der Polkerneinsatz (84) den Innenraum (15) der Hülse (10) und den Hohlraum (73) des Magnetgehäuses (7) gegenüber dem Hydraulikventil (1) verschließt, wobei zur Abdichtung der Spule (22) gegenüber dem Hydraulikfluid des Hydraulikventils (1) sowie gegenüber dem Hydraulikfluid des Innenraums (15) ein erstes Dichtelement (14) zwischen dem Polkerneinsatz (84) und dem Spulenträger (23), die Hülse (10) umfassend, im Hohlraum (73) angeordnet ist.

2. Aktuator nach Anspruch 1,
**dadurch gekennzeichnet, dass**
das erste Dichtelement (14) zwischen dem Polkerneinsatz (84) und einer ersten Polscheibe (83) positioniert ist.

3. Aktuator nach Anspruch 1 oder 2,
**dadurch gekennzeichnet, dass**
die Hülse (10) eine dem Polkerneinsatz (84) zugewandt positionierbare Krempe (13') aufweist, wobei das erste Dichtelement (14) angrenzend an die Krempe (13') sowie angrenzend an den Polkerneinsatz (84) angeordnet ist.

4. Aktuator nach Anspruch 3,
**dadurch gekennzeichnet, dass**
die Krempe (13') in ihrer axialen Erstreckung gebogen ausgebildet ist.

5. Aktuator nach Anspruch 3 oder 4,
**dadurch gekennzeichnet, dass**
die Krempe (13') einen Krempenring (131) und eine mit dem Krempenring (131) verbundene Krempenscheibe (132) aufweist, wobei der Krempenring (131) und die Krempenscheibe (132) unter Ausbildung eines Winkels (α) miteinander verbunden sind.

6. Aktuator nach einem der vorherigen Ansprüche,
**dadurch gekennzeichnet, dass**
das erste Dichtelement (14) eine dem Polkerneinsatz (84) zugewandt ausgebildeten Krempe (13') der Hülse (10) umfassend zwischen der Krempe (13') und dem Magnetgehäuse (7) positioniert ist.

7. Aktuator nach Anspruch 6,
**dadurch gekennzeichnet, dass**
das erste Dichtelement (14) einen Krempenring (131) der Krempe (13') umfassend ausgebildet ist.

8. Aktuator nach einem der vorherigen Ansprüche,
**dadurch gekennzeichnet, dass**
eine dem Polkerneinsatz (84) zugewandt positionierte Krempe (13') komplementär zu einer Kontur des Polkerneinsatzes (84) ausgebildet ist.

9. Aktuator nach einem der vorherigen Ansprüche,
**dadurch gekennzeichnet, dass**
der Polkerneinsatz (84) zumindest teilweise im Innenraum (15) der Hülse (10) unbewegbar aufgenommen ist.

10. Aktuator nach Anspruch 5,
**dadurch gekennzeichnet, dass**
die Hülse (10) bis zur Krempenscheibe (132) über ihre axiale Erstreckung (E) einen konstant ausgebildeten Innendurchmesser (DI) aufweist.

11. Hydraulikventil mit einem Aktuator zur axialen Bewegung eines in einem Ventilgehäuse (3) axial bewegbar aufgenommenen Ventilkolbens (4) des Hydraulikventils (1), wobei ein Stößel (21) des Aktuators (2) in Wirkverbindung mit dem Ventilkolben (4) steht,
**dadurch gekennzeichnet, dass**
der Aktuator (2) gemäß einem der Ansprüche 1 bis 10 ausgebildet ist.
